# EUROPÄISCHE PATENTSCHRIFT

(11) **EP 3 847 707 B1**
(45) Veröffentlichungstag und Bekanntmachung des Hinweises auf die Patenterteilung: **26.02.2025**
(21) Anmeldenummer: 19762707.8
(22) Anmeldetag: 02.08.2019
(51) Int. Cl.: H01M 50/213, H01M 50/296, H01M 50/514, H01M 50/522

(54) **VERFAHREN ZUM ELEKTRISCHEN KONTAKTIEREN EINES BATTERIEBLOCKS**
METHOD FOR ELECTRICALLY CONTACTING A BATTERY BLOCK
PROCÉDÉ POUR FORMER UN CONTACT ÉLECTRIQUE D'UN BLOC DE BATTERIES

(30) Priorität: 05.09.2018 DE 102018121696
(43) Veröffentlichungstag der Anmeldung: 14.07.2021
(73) Patentinhaber: Hesse GmbH, 33104 Paderborn (DE)
(72) Erfinder: BRÖKELMANN, Michael, 33129 Delbrück (DE); HESSE, Hans-Jürgen, 33106 Paderborn (DE); HUNSTIG, Matthias, 33104 Paderborn (DE)
(74) Vertreter: Wickord, Wiro
(86) Internationale Anmeldenummer: PCT/DE2019/100704
(87) Internationale Veröffentlichungsnummer: WO 2020/048561

(56) Entgegenhaltungen:
- EP-A1- 3 109 925
- JP-A- H0 474 445

## Beschreibung

Die Erfindung betrifft ein Verfahren zum elektrischen Kontaktieren einer Mehrzahl von Batteriezellen eines Batterieblocks.

In der Praxis werden Batterieblöcke heute durch Laserschweißen elektrisch kontaktiert. Es ist hierbei so, dass der Werkstoff lokal mittels eines Laserstrahls erwärmt und/oder angeschmolzen wird und/oder dass infolge der Erwärmung Metallspritzer und/oder Verunreinigungen entstehen, welche zu einer Beeinträchtigung der Batteriefunktion führen können. Regelmäßig gelingt es demgegenüber jedoch heute nicht oder nur sehr eingeschränkt, Batteriezellen eines Batterieblocks elektrisch mittels Ultraschallbonden zu verbinden. Hierzu trägt zum einen bei, dass der Untergrund nachgiebig, weich beziehungsweise elastisch ist und zum Mitschwingen neigt. Somit bieten sich keine optimalen Voraussetzungen für das Ultraschallbonden. Zum anderen sind die elektrischen Anschlusskontaktflächen der Batteriezellen aufgrund ihrer Härte, ihrer Körnung und ihrer Gitterstruktur mit üblichen Mitteln nicht oder nur unzureichend zu bonden. Insofern sind die für die Batterieblöcke verwendeten Werkstoffe und das Ultraschallbonden als Fertigungsverfahren weitgehend unverträglich. Relevanter Stand der Technik ist beispielsweise aus den Dokumenten EP 3 109 925 A1 und JP H04 74445 bekannt.

Aufgabe der vorliegenden Erfindung ist es, ein modifiziertes Ultraschallbondverfahren anzugeben, welches es erlaubt, Batteriezellen eines Batterieblocks elektrisch zu kontaktieren.

Zur Lösung der Aufgabe weist die Erfindung die Merkmale des Patentanspruchs 1 auf.

Es ist demzufolge erfindungsgemäß vorgesehen, dass das Ultraschallbondverfahren zum elektrischen Kontaktieren einer Mehrzahl von Batteriezellen eines Batterieblocks die folgenden Schritte umfasst:
- ein erster Anschlusspunkt wird hergestellt, indem ein Bondwerkzeug unmittelbar und eine erste Anschlusskontaktfläche einer ersten Batteriezelle und/oder der Anschlussleiter jedenfalls lokal mittelbar durch einen auf das Bondwerkzeug gerichteten und von einem Laser bereitgestellten Laserstrahl erwärmt werden, indem der Anschlussleiter mittels des Bondwerkzeugs gegen die erste Anschlusskontaktfläche der ersten Batteriezelle angedrückt wird und indem das Bondwerkzeug zu Ultraschallschwingungen angeregt wird, wobei die Ultraschallschwingungen von dem Bondwerkzeug auf den Anschlussleiter übertragen werden;
- ein zweiter Anschlusspunkt wird hergestellt, indem der Anschlussleiter von dem Bondwerkzeug gegen eine zweite Anschlusskontaktfläche einer zweiten Batteriezelle des Batterieblocks oder einen Sammelanschlusskontakt des Batterieblocks angedrückt und zu Ultraschallschwingungen angeregt wird.

Der besondere Vorteil der Erfindung besteht darin, dass Batteriezellen infolge der Erfindung mittels Ultraschallbonden kontaktiert werden können, da durch den Laser die Härte, die Körnung beziehungsweise die Materialeigenschaften der Anschlusspunkte beeinflusst werden, und dass die elektrische Kontaktierung von Batterieblöcken mittels Ultraschallbonden besonders wirtschaftlich, das heißt schnell und kostengünstig hergestellt wird. Insbesondere eignet sich das erfindungsgemäße Verfahren für die Serienproduktion, da die etablierten Prüfroutinen für das Ultraschallbonden verwendet werden können, um den Bondprozess fortwährend zu kontrollieren beziehungsweise eine nachgelagerte Qualitätsprüfung durchzuführen. Insofern kann eine große Anzahl von Batteriezellen, welche zu Batterieblöcken verbunden werden, zuverlässig verarbeitet werden.

Das erfindungsgemäße Ultraschallbondverfahren kann darüber hinaus gut automatisiert werden, sodass es sich insbesondere für die Fertigung von Batterieblöcken für die Automobilindustrie eignet. Es können beispielsweise handelsübliche Batteriezellen bedarfsgerecht konfektioniert und elektrisch kontaktiert werden.

In Bezug auf die Reihenfolge der verfahrensmäßigen Arbeitsschritte ist es unerheblich, ob zunächst der erste Anschlusspunkt und dann der zweite Anschlusspunkt hergestellt wird oder ob zunächst der zweite Anschlusspunkt und dann der erste Anschlusspunkt hergestellt wird. Die Reihenfolge wird der Fachmann in Kenntnis der prozessualen Besonderheiten festlegen.

Nach einer bevorzugten Ausführungsform der Erfindung wird beim Herstellen des zweiten Anschlusspunkts die zweite Anschlusskontaktfläche beziehungsweise der Sammelanschlusskontakt des Batterieblocks mittelbar mithilfe des erwärmten Bondwerkzeugs und jedenfalls lokal erwärmt. Vorteilhaft kann durch das Erwärmen der zweiten Anschlusskontaktfläche der Ultraschallbondprozess weiter optimiert und insbesondere beschleunigt werden. Darüber hinaus kann das erfindungsgemäße Ultraschallbondverfahren angewendet werden, wenn der Kontaktpartner für den Anschlussleiter beim zweiten Anschlusspunkt ebenso wie die erste Anschlusskontaktfläche der ersten Batteriezelle aufgrund seiner Härte, seiner Körnung, seiner Gitterstruktur beziehungsweise seiner anderweitigen stofflichen oder konstruktiven Beschaffenheit schwer zu bonden ist.

Insbesondere kann nach der Erfindung vorgesehen sein, dass die erste Anschlusskontaktfläche und/oder die zweite Anschlusskontaktfläche als eine Anschlusskontaktfläche aus einem nickelbeschichteten Stahl, aus CuSn6, CuFe2 beziehungsweise durch eine Sn-beschichtete Oberfläche bereitgestellt wird. Der Sammelanschlusskontakt kann beispielsweise aus Kupfer oder Aluminium gefertigt sein. Die erste Anschlusskontaktfläche und/oder die zweite Anschlusskontaktfläche können beispielsweise durch einen Werkstoff beziehungsweise ein Material bereitgestellt sein, welches keine kubisch-flächenzentrierte Gitterstruktur aufweist.

Als Anschlussleiter kann beispielsweise ein Bändchen mit einem wesentlich rechteckigen Querschnitt beim Ultraschallbändchenbonden oder ein Draht mit einem runden Querschnitt beim Ultraschalldrahtbonden verwendet werden. Der Anschlussleiter kann beispielsweise aus Aluminium oder Kupfer bereitgestellt werden.

Nach einer Weiterbildung der Erfindung wird eine Mehrzahl von ersten Anschlusskontaktflächen verschiedener erster Batteriezellen durch eine zu der Anzahl der verschiedenen ersten Batteriezellen korrespondierende Anzahl von Anschlussleitern mit einem gemeinsamen Sammelanschlusskontakt verbunden. Vorteilhaft kann durch das Vorsehen des gemeinsamen Sammelanschlusskontakts für eine Mehrzahl von gleichartigen Batteriezellen der Anschluss des durch das erfindungsgemäße Ultraschallbondverfahren hergestellten Batterieblocks vereinfacht werden. Der Batterieblock beziehungsweise die gemeinsam verschalteten Batteriezellen können insbesondere über den gemeinsamen Sammelanschlusskontakt elektrisch kontaktiert werden. Beispielsweise können an einem Batterieblock mehrere Sammelanschlusskontakte vorgesehen werden, welche jeweils die elektrisch leitende Verbindung zu einer Mehrzahl von ersten Batteriezellen und/oder zweiten Batteriezellen bereitstellen.

Nach einer alternativen Ausführungsform der Erfindung wird der erste Anschlusspunkt der ersten Batteriezelle gebildet und mit dem zweiten Anschlusspunkt verbunden, der an einer benachbarten zweiten Batteriezelle vorgesehen ist. Es gelingt insofern durch das erfindungsgemäße Ultraschallbondverfahren, eine Reihenschaltung aus verschiedenen Batteriezellen bereitzustellen und hierüber die mittels der Batteriezelle bereitgestellte Spannung über das Herstell- beziehungsweise Kontaktverfahren zu beeinflussen.

Nach einer Weiterbildung der Erfindung erfolgt die Erwärmung der ersten Anschlusskontaktfläche und/oder der zweiten Anschlusskontaktfläche und/oder des Sammelanschlusskontakts, während der Anschlussleiter von dem erwärmten Bondwerkzeug gegen die erste Anschlusskontaktfläche und/oder die zweite Anschlusskontaktfläche und/oder den Sammelanschlusskontakt gedrückt wird und/oder während der Anschlussleiter zu Ultraschallschwingungen angeregt wird. Es ergibt sich hierdurch vorteilhaft eine Unterstützung des Ultraschallbondens durch die zusätzliche Bereitstellung von thermischer Energie. Die Steifigkeit beziehungsweise Härte der Anschlusskontaktflächen beziehungsweise der Sammelanschlusskontakte können hierdurch sinken beziehungsweise Versetzungsbewegungen im Metallgitter begünstigt werden mit der Folge, dass Werkstoffe gebonden werden können, die im Batteriebau üblich sind aber ansonsten nicht oder nur eingeschränkt gebonden werden können.

Nach einer Weiterbildung der Erfindung kann im Laufe der Herstellung des ersten Anschlusspunkts und/oder des zweiten Anschlusspunkts der Laser deaktiviert beziehungsweise eine Leistung des Lasers reduziert und optimal bis auf null gesenkt werden. Dies gilt insbesondere dann, wenn anhand der beim Ultraschallbonden ermittelten Prozessparameter erkannt wird, dass die stoffschlüssige Verbindung des Anschlussleiters mit der Anschlusskontaktfläche beziehungsweise dem Sammelanschlusskontakt zuverlässig hergestellt werden kann und/oder eine unzulässig hohe Erwärmung der Anschlusskontaktfläche erkannt wird.

Nach einer Weiterbildung der Erfindung kann vorgesehen sein, das Bondwerkzeug zu erwärmen, bevor der Anschlussleiter mit dem Bondwerkzeug gegen die Anschlusskontaktfläche beziehungsweise den Sammelanschlusskontakt gedrückt wird beziehungsweise zu Ultraschallschwingungen angeregt wird. Durch das Vorwärmen des Bondwerkzeugs können einzelne Schritte des erfindungsgemäßen Ultraschallbondverfahrens parallel durchgeführt werden, um so den Herstellprozess insgesamt zu beschleunigen beziehungsweise wirtschaftlich zu gestalten. Insbesondere kann das Bondwerkzeug erwärmt werden, während es für den nächsten Bond neu positioniert wird.

Nach einer Weiterbildung der Erfindung kann der Laser gepulst betrieben werden. Aufgrund der Trägheit des Wärmeflusses ergibt sich hierbei eine gleichwohl ausreichende und gleichmäßige Erwärmung des Bondwerkzeugs, der Anschlusskontaktfläche beziehungsweise des Sammelanschlusskontakts. Der pulsierende Betrieb des Lasers bietet sich beispielsweise an, wenn es nicht möglich ist, eine Leistung des Lasers variabel einzustellen. Die dem Bondprozess zugeführte thermische Energie wird dann über die Taktung des Laserstrahls beeinflusst.

Nach einer Weiterbildung der Erfindung können vorrichtungsseitig Sensoren vorgesehen sein, um eine Temperatur oder eine mechanische Beschaffenheit der Anschlusskontaktfläche beziehungsweise des Sammelanschlusskontakts zu erfassen. Es können insofern mittels der Sensorik die Prozessparameter für den Laser, insbesondere eine Laserleistung beziehungsweise eine Aktivierungsdauer des Lasers, bestimmt und gegebenenfalls geregelt werden, so dass ein zeitlicher Soll-Verlauf abgebildet werden kann.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: eine erste Konfiguration eines mittels des erfindungsgemäßen Ultraschallbondverfahrens hergestellten Batterieblocks,
- Fig. 2: eine zweite Konfiguration des mittels des erfindungsgemäßen Ultraschallbondverfahrens hergestellten Batterieblocks,
- Fig. 3: ein erstes Beispiel eines zeitlichen Verlaufs einer Normalkraft, einer Ultraschallleistung und einer Laserleistung bei der Anwendung des erfindungsgemäßen Ultraschallbondverfahrens,
- Fig. 4: ein zweites Beispiel des zeitlichen Verlaufs der Normalkraft, der Ultraschallleistung und der Laserleistung bei der Anwendung des erfindungsgemäßen Ultraschallbondverfahrens,
- Fig. 5: ein drittes Beispiel des zeitlichen Verlaufs der Normalkraft, der Ultraschallleistung und der Laserleistung bei der Anwendung des erfindungsgemäßen Ultraschallbondverfahrens,
- Fig. 6: ein viertes Beispiel des zeitlichen Verlaufs der Normalkraft, der Ultraschallleistung und der Laserleistung bei der Anwendung des erfindungsgemäßen Ultraschallbondverfahrens,
- Fig. 7: ein fünftes Beispiel des zeitlichen Verlaufs der Normalkraft, der Ultraschallleistung und der Laserleistung bei der Anwendung des erfindungsgemäßen Ultraschallbondverfahrens,
- Fig. 8: ein sechstes Beispiel des zeitlichen Verlaufs der Normalkraft, der Ultraschallleistung und der Laserleistung bei der Anwendung des erfindungsgemäßen Ultraschallbondverfahrens,
- Fig. 9: ein siebtes Beispiel des zeitlichen Verlaufs der Normalkraft, der Ultraschallleistung und der Laserleistung bei der Anwendung des erfindungsgemäßen Ultraschallbondverfahrens,
- Fig. 10: ein achtes Beispiel des zeitlichen Verlaufs der Normalkraft, der Ultraschallleistung und der Laserleistung bei der Anwendung des erfindungsgemäßen Ultraschallbondverfahrens,
- Fig. 11: ein neuntes Beispiel des zeitlichen Verlaufs der Normalkraft, der Ultraschallleistung und der Laserleistung bei der Anwendung des erfindungsgemäßen Ultraschallbondverfahrens,
- Fig. 12: ein zehntes Beispiel des zeitlichen Verlaufs der Normalkraft, der Ultraschallleistung und der Laserleistung bei der Anwendung des erfindungsgemäßen Ultraschallbondverfahrens,
- Fig. 13: ein elftes Beispiel des zeitlichen Verlaufs der Normalkraft, der Ultraschallleistung und der Laserleistung bei der Anwendung des erfindungsgemäßen Ultraschallbondverfahrens,
- Fig. 14: ein zwölftes Beispiel des zeitlichen Verlaufs der Normalkraft, der Ultraschallleistung und der Laserleistung bei der Anwendung des erfindungsgemäßen Ultraschallbondverfahrens,
- Fig. 15: ein dreizehntes Beispiel des zeitlichen Verlaufs der Normalkraft, der Ultraschallleistung und der Laserleistung bei der Anwendung des erfindungsgemäßen Ultraschallbondverfahrens,
- Fig. 16: ein vierzehntes Beispiel des zeitlichen Verlaufs der Normalkraft, der Ultraschallleistung und der Laserleistung bei der Anwendung des erfindungsgemäßen Ultraschallbondverfahrens,
- Fig. 17: ein fünfzehntes Beispiel des zeitlichen Verlaufs der Normalkraft, der Ultraschallleistung und der Laserleistung bei der Anwendung des erfindungsgemäßen Ultraschallbondverfahrens,
- Fig. 18: ein sechzehntes Beispiel des zeitlichen Verlaufs der Normalkraft, der Ultraschallleistung und der Laserleistung bei der Anwendung des erfindungsgemäßen Ultraschallbondverfahrens,
- Fig. 19: ein siebzehntes Beispiel des zeitlichen Verlaufs der Normalkraft, der Ultraschallleistung und der Laserleistung bei der Anwendung des erfindungsgemäßen Ultraschallbondverfahrens und
- Fig. 20: ein achtzehntes Beispiel des zeitlichen Verlaufs der Normalkraft, der Ultraschallleistung und der Laserleistung bei der Anwendung des erfindungsgemäßen Ultraschallbondverfahrens.

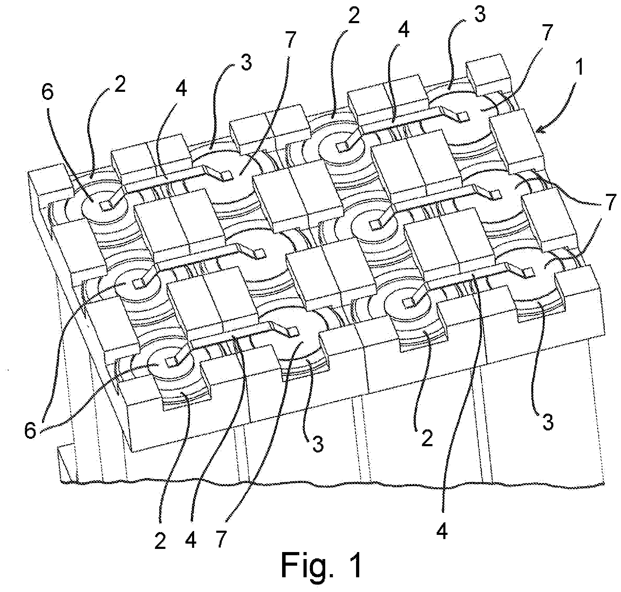

Fig. 1 zeigt eine erste Konfiguration eines aus zwölf in einer 3x4-Matrixform regelmäßig angeordneten Batteriezellen 2, 3 gebildeten Batterieblocks. Der Batterieblock sieht eine erste Reihe von drei nebeneinander angeordneten ersten Batteriezellen 2, eine zweite Reihe von drei zweiten Batteriezellen 3, eine dritte Reihe von wieder drei ersten Batteriezellen 2 sowie eine vierte Reihe von wieder drei zweiten Batteriezellen 3 vor. Die Batteriezellen 2, 3 werden von einem Gehäuse 1 des Batterieblocks gehalten.

Benachbarte erste Batteriezellen 2 der ersten Reihe und zweite Batteriezellen 3 der zweiten Reihe sowie benachbarte erste Batteriezellen 2 der dritten Reihe und zweite Batteriezellen 3 der vierten Reihe sind über Anschlussleiter 4 paarweise elektrisch kontaktiert. Es ist hierbei jeweils eine erste Anschlusskontaktfläche 6 der ersten Batteriezellen 2 mit einer zweiten Anschlusskontaktfläche 7 der zweiten Batteriezellen 3 verbunden, indem zwischen den Anschlusskontaktflächen 6, 7 einerseits und den Anschlussleitern 4 andererseits Anschlusspunkte hergestellt sind.

Die Anschlusspunkte, welche zwischen dem Anschlussleiter 4 einerseits und dem ersten Anschlusskontakt 6 beziehungsweise dem zweiten Anschlusspunkt 7 andererseits hergestellt sind, werden durch Ultraschallbonden stoffschlüssig gebildet. Es wird dabei der Anschlussleiter 4 mittels eines nicht dargestellten Bondwerkzeugs gegen die Anschlusskontaktflächen 6, 7 angedrückt und über das Bondwerkzeug zu Ultraschallschwingungen angeregt. Zusätzlich werden der Anschlussleiter 4 und die Anschlusskontaktflächen 6, 7 mittels eines Lasers erwärmt. Die Anschlusskontaktflächen 6, 7 sind beispielsweise aus nickelbeschichteten Stahl, CnSn6, CuFe2 oder durch Sn-beschichteten Oberflächen gebildet. Die Anschlusskontaktflächen 6, 7 sind insofern beispielsweise besonders hart, fein gekörnt beziehungsweise durch ein Material bereitgestellt, welches eine nicht kubisch-flächenzentrierte Gitterstruktur aufweist.

Der in Fig. 1 dargestellte Batterieblock kann beispielsweise stets gleiche Batteriezellen 2, 3 im Standardformat 18650 vorsehen, wobei die Batteriezellen 2, 3 einen Durchmesser vom 18 mm und eine Höhe von 65 mm aufweisen. Bei der Konfiguration des Batterieblocks ist die Orientierung benachbarter, unterschiedlichen Reihen zugeordneter Batteriezellen 2, 3 jedoch so gewählt, dass eine Reihenverschaltung beziehungsweise -kontaktierung der benachbarten Batteriezellen 2, 3 möglich ist. Die erste Anschlusskontaktfläche 6 definiert insofern einen Pluspol der ersten Batteriezelle 2 und die zweite Anschlusskontaktfläche 7 einen Minuspol der zweiten Batteriezelle 3. Die Kontaktierung erfolgt über ein Bändchen als Anschlussleiter 4, welches einen im Wesentlichen rechteckigen Querschnitt aufweist.

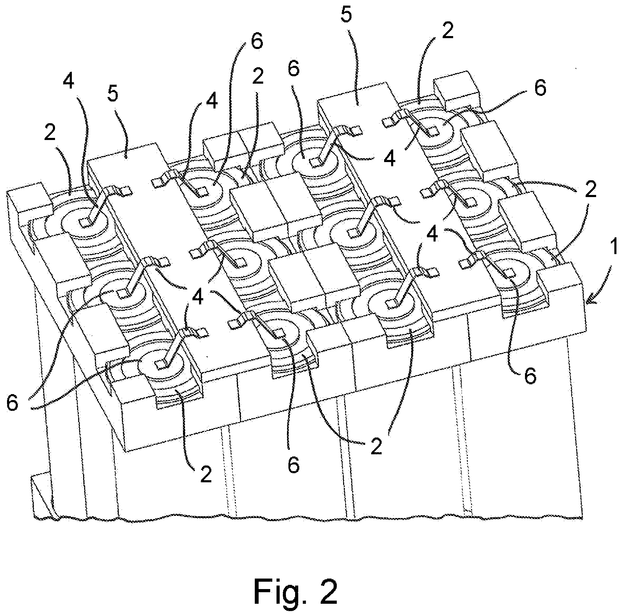

Ein alternativer Batterieblock nach Fig. 2 sieht die ersten Batteriezellen 2 in einer stets gleichen Orientierung in einer 3x4-Matrixanordnung vor. Die Kontaktierung der ersten Batteriezellen 2 erfolgt hier über Anschlussleiter 4, welche mit den ersten Anschlusskontaktflächen 6 der ersten Batteriezellen 2 einerseits und Sammelanschlusskontakten 5 andererseits stoffschlüssig verbunden sind. Die Sammelanschlusskontakte 5 sind so ausgebildet, dass stets benachbarte Reihen mit jeweils drei ersten Batteriezellen 2 gemeinsam an einem Sammelanschlusskontakt 5 kontaktiert sind.

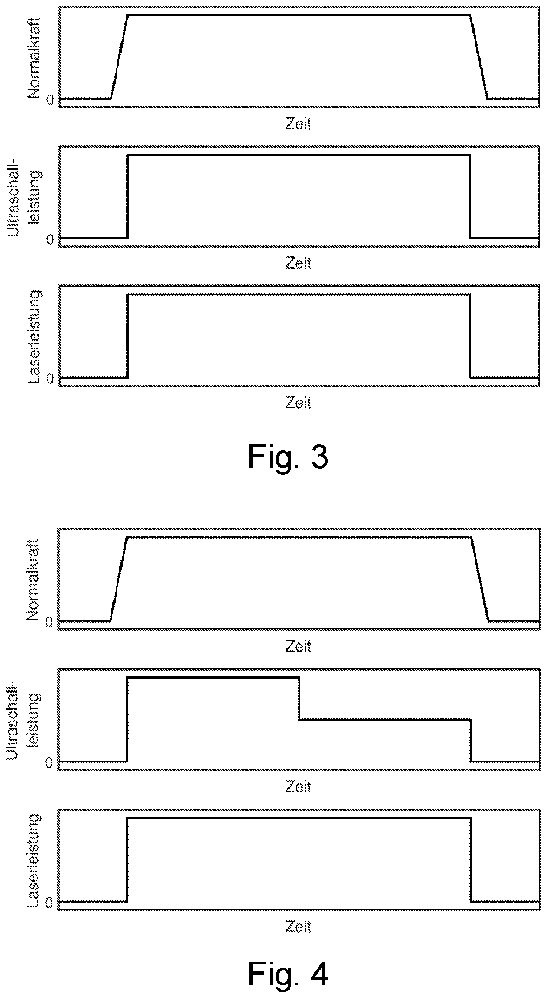

Zur stoffschlüssigen Kontaktierung der Batteriezellen 2, 3 wird es verfahrensseitig zum einen auf eine Normalkraft ankommen, mit der das Bondwerkzeug gegen die Anschlusskontaktfläche 6, 7 beziehungsweise den Sammelanschlusskontakt 5 gedrückt wird. Ferner werden eine Ultraschallleistung sowie eine Laserleistung einen maßgeblichen Einfluss auf die Ausbildung des Kontakts haben. Alternative Konfigurationen für die Prozessparameter Normalkraft, Ultraschallleistung und Laserleistung sind nachfolgend in den Fig. 3 bis 20 dargestellt.

Es sind die dargestellten Prozessparameter normiert und vereinfacht. In der Realität kann beispielsweise vorgesehen sein, dass die Normalkraft in der zweiten Hälfte des Bondprozesses erhöht wird beziehungsweise die Ultraschallleistung zum Ende des Bondprozesses hin tendenziell reduziert wird. Beispielsweise kann auch die Laserleistung zum Ende des Bondprozesses hin reduziert werden.

Ein erster, verfahrenstechnisch einfach zu realisierender Fall nach Fig. 3 sieht vor, dass das Bondwerkzeug gleichzeitig angedrückt und zu Ultraschallschwingungen angeregt und der Laser aktiviert wird. Da die Normalkraft im Vergleich zu den beiden anderen Prozessgrößen, der Ultraschallunterstützung und der Laserleistung, nur langsam geändert werden kann, ist in den Grafiken hier ein rampenmäßiger Anstieg beziehungsweise Abfall der Normalkraft hinterlegt, wohingegen für die Ultraschallleistung und die Laserleistung eine sprunghafte Aktivierung beziehungsweise Zuschaltung vorgesehen sind.

Fig. 4 zeigt ein modifiziertes Verfahren, bei dem die Ultraschallleistung während des Prozesses geändert beziehungsweise angepasst und insbesondere sprungartig reduziert wird.

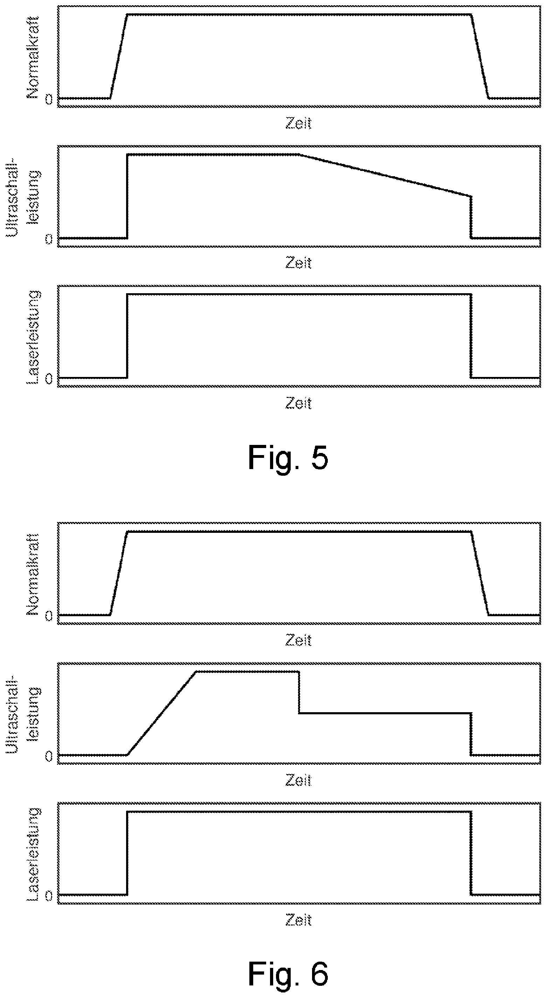

Alternativ kann, wie in den Fig. 5 und 6 dargestellt, die Ultraschallleistung kontinuierlich angehoben beziehungsweise reduziert werden.

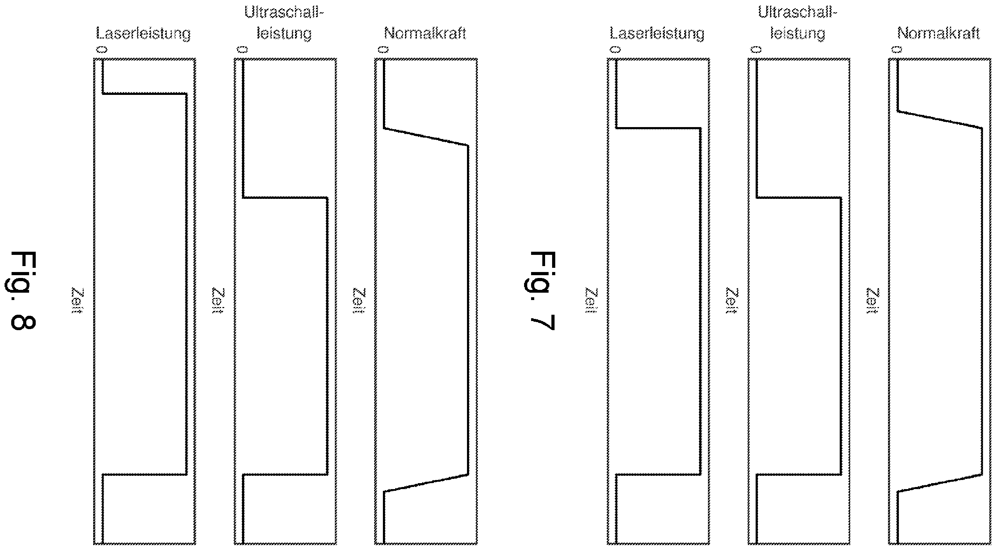

Fig. 7 zeigt, dass nach einer alternativen Ausführungsform des erfindungsgemäßen Verfahrens der Ultraschall zugeschaltet werden kann, nachdem das Bondwerkzeug gegen die Anschlusskontaktflächen 6, 7 beziehungsweise den Sammelanschlusskontakt 5 angedrückt wird und der Laser aktiviert ist.

Ebenso kann, wie in Fig. 8 dargestellt, zunächst der Laser aktiviert und dann das Bondwerkzeug gegen die Anschlusskontaktflächen 6, 7 beziehungsweise den Sammelanschlusskontakt 5 angedrückt werden. Das Bondwerkzeug wird insofern bereits vor dem Aufsetzen durch den Laserstrahl vorgewärmt. Nach dem Aufsetzen wird es weiter erwärmt, wobei der Anschlussleiter 4 und die Anschlusskontaktflächen 6, 7 beziehungsweise der Sammelanschlusskontakt 5 von dem Bondwerkzeugs mittelbar mit erwärmt werden. Der Ultraschall wird erst zugeschaltet, wenn die zu verbindenden Fügepartner eine erhöhte Temperatur erreicht haben. Die Temperatur kann optional sensorisch überwacht werden. Vorteilhaft ergibt sich eine kurze Prozessdauer, da der Anschlussleiter und die Fügepartner schnell erwärmt werden können, da das Bondwerkzeug beim Aufsetzen bereits erwärmt ist. Darüber hinaus kann der Verschleiß des Bondwerkzeugs reduziert werden, da der Ultraschall erst aktiviert wird, wenn die Fügepartner infolge der Erwärmung eine geringere Festigkeit aufweisen.

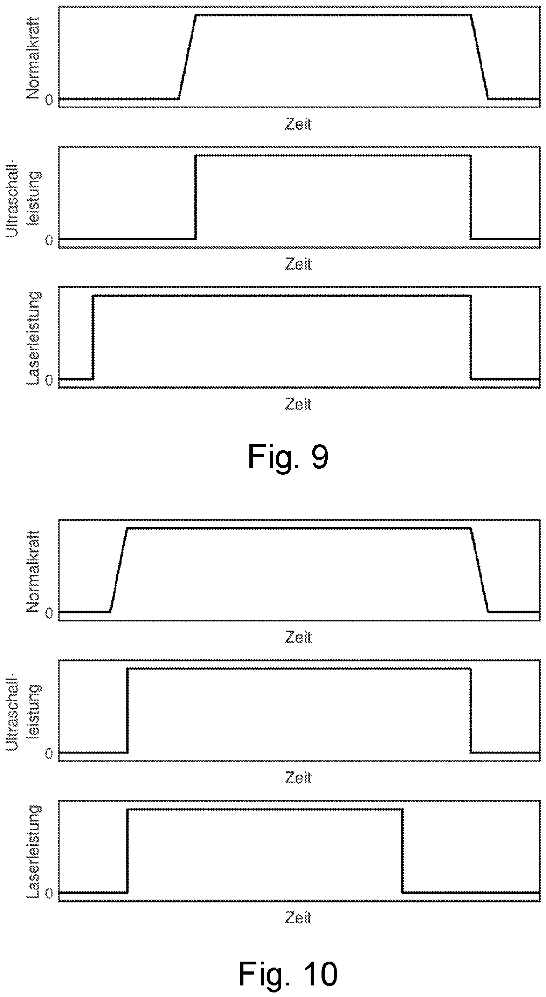

Eine weitere alternative Ausführungsform für das erfindungsgemäße Ultraschallbondverfahren ist in Fig. 9 gezeigt. Hier ist es so, dass zunächst das Bondwerkzeug mittels des Laserstrahls vorgewärmt wird und dann in einem nachfolgenden Schritt zeitgleich das erwärmte Bondwerkzeug gegen die Anschlusskontaktflächen 6, 7 beziehungsweise den Sammelanschlusskontakt 5 angedrückt und der Ultraschall zugeschaltet wird.

Fig. 10 stellt dar, dass insbesondere zur Vermeidung einer unzulässigen Erwärmung der Anschlusskontaktfläche 6, 7 beziehungsweise des Sammelanschlusskontakts 5 der Laser deaktiviert werden kann, bevor der Ultraschallbondprozess abgeschlossen ist. Hier werden insofern die Normalkraft und die Ultraschallleistung länger aufrechterhalten, als der Laser aktiviert ist.

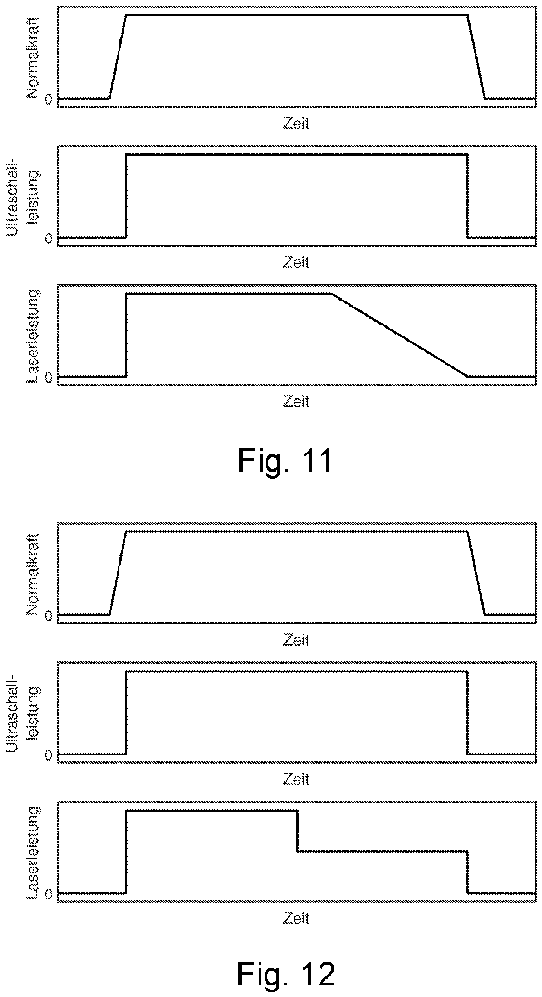

Fig. 11 zeigt eine modifizierte Form der vorstehend beschriebenen Verfahrensvariante. Hier ist es so, dass die Laserleistung nicht schlagartig abgeschaltet, sondern im Verlauf der Zeit abgesenkt wird. Exemplarisch ist hier eine Reduzierung der Laserleistung nach Art einer Rampe dargestellt. Hierbei ist berücksichtigt, dass zum Ende des Bondprozesses hin die Fügepartner erwärmt sind und die Verbindungsbildung weitgehend abgeschlossen ist. Insofern wird der Wärmeeintrag reduziert und die Gefügebildung kann begünstigt werden.

Eine weitere Alternative des vorstehenden Ultraschallbondverfahrens nach Fig. 12 sieht vor, die Laserleistung in zwei Stufen zu reduzieren. Insbesondere kann die Laserleistung reduziert und/oder vollständig abgeschaltet werden, um eine unzulässige Erwärmung der Anschlusskontaktfläche 6, 7 beziehungsweise des Sammelanschlusskontakts 5 zu vermeiden.

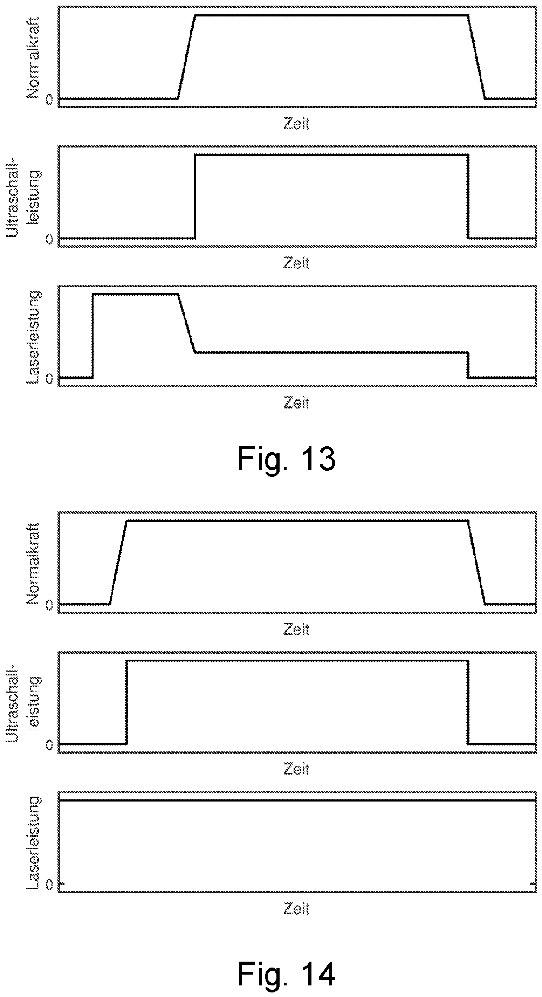

Fig. 13 zeigt eine Verfahrensvariante, bei der zum Vorwärmen des Bondwerkzeugs die Laserleistung vor dem Aktivieren des Ultraschalls beziehungsweise vor dem Andrücken des Bondwerkzeugs erhöht wird. Insgesamt kann durch das Vorwärmen des Bondwerkzeugs während der Neupositionierung desselben die Prozesszeit gesenkt werden.

Nach einer alternativen Ausführungsform der Erfindung kann vorgesehen sein, dass der Laser kontinuierlich betrieben wird zum Erwärmen des Bondwerkzeugs (vergleiche Fig. 14).

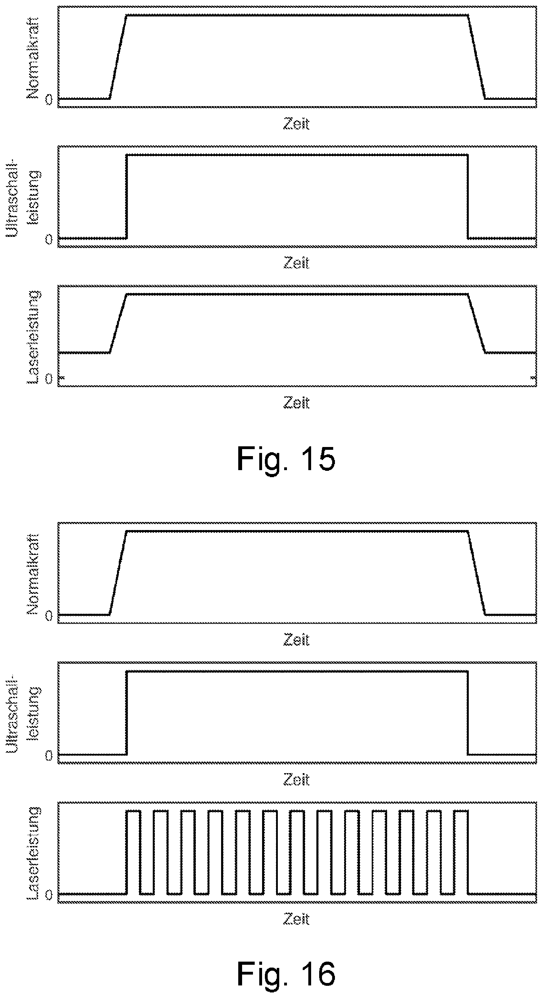

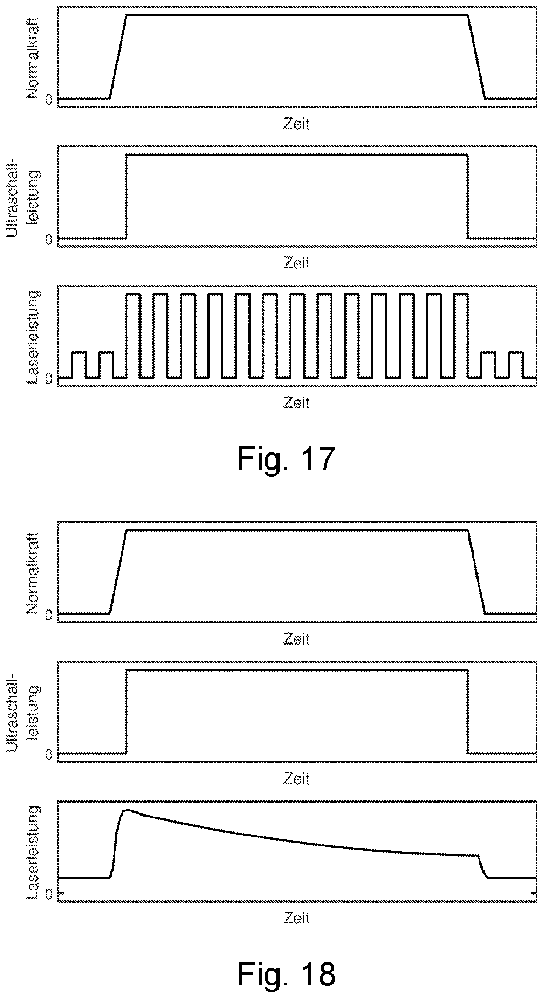

Alternativ kann nach Fig. 15 vorgesehen sein, dass ein kontinuierlich betriebener Laser vorgesehen ist und die Laserleistung temporär erhöht wird, während das Bondwerkzeug gegen die Anschlusskontaktfläche 6, 7 beziehungsweise den Sammelanschlusskontakt 5 angedrückt ist und/oder der Ultraschall zugeschaltet wird. Das Bondwerkzeug wird insofern mittels des Laserstrahls kontinuierlich mit geringer Leistung erwärmt. Wenn das Bondwerkzeug den Anschlussleiter 4 gegen die Anschlusskontaktflächen 6, 7 beziehungsweise den Sammelanschlusskontakt 5 drückt, wird die Laserleistung erhöht, sodass mehr Wärme in Richtung der Fügepartner abfließt. Insbesondere aufgrund der kontinuierlichen Erwärmung des Bondwerkzeugs kann die Bondzeit reduziert beziehungsweise gering gehalten werden. Der Anschlussleiter 4 und die Fügepartner erwärmen sich insofern vergleichsweise schnell. Nach einer alternativen Ausführungsform der Erfindung kann der Laser gepulst betrieben werden. Entsprechende Varianten des Ultraschallbondverfahrens sind in den Fig. 16 und 17 dargestellt. Im Pulsbetrieb können die Laserleistung und die Pulsfrequenz so gewählt werden, dass verglichen mit dem nicht gepulsten Betrieb ein gleicher thermischer Effekt in Bezug auf das Bondwerkzeug einerseits und die Fügepartner andererseits erreicht werden kann. Beispielsweise kann die in Fig. 16 dargestellte Laserleistung der Laserleistung nach Fig. 3 entsprechen. Der Pulsbetrieb bietet sich beispielsweise dann an, wenn der Laser bauartbedingt nur gepulst betrieben werden kann und/oder die Laserleistung nicht so gering eingestellt werden kann, wie dies für eine optimale Erwärmung des Bondwerkzeugs beziehungsweise der Fügepartner geboten ist.

Fig. 18 macht deutlich, dass die Laserleistung individuell gewählt beziehungsweise bedarfsgerecht gesteuert werden kann. Beispielsweise kann mittels einer Sensorikkomponente eine Temperatur der Anschlusskontaktfläche 6, 7 beziehungsweise des Sammelanschlusskontakts 5 bestimmt werden und die Laserleistung in Abhängigkeit von der Temperatur so angepasst werden, dass stets sicher und zuverlässig eine stoffschlüssige Verbindung der Batteriezellen 2, 3 mit dem Anschlussleiter 4 beziehungsweise dem Sammelanschlusskontakt 5 hergestellt wird.

Das Bondwerkzeug wird dabei mit einer geringen Laserleistung kontinuierlich erwärmt beziehungsweise geheizt und auf einer erhöhten Betriebstemperatur gehalten. Dies gilt gleichermaßen bei der Herstellung der einzelnen Anschlusspunkte und in der Zwischenzeit, beispielsweise beim Verfahren und/oder Neupositionieren des Bondwerkzeugs, da hierdurch die Aufwärmzeit für das Bondwerkzeug reduziert und/oder die Prozessstabilität sowie die Bondqualität verbessert werden können.

Sobald das Bondwerkzeug aufsetzt und der Anschlussleiter 4 gegen die Anschlusskontaktfläche 6, 7 beziehungsweise den Sammelanschlusskontakt 5 angedrückt wird, wird die Laserleistung erhöht, um so die Fügepartner zu erwärmen. Während des Bondprozesses wird dann die Laserleistung geregelt beziehungsweise kontinuierlich reduziert, um die Temperatur des Bondwerkzeugs trotz steigender Temperatur der Fügepartner und dadurch geringen Wärmeabflusses konstant zu halten. Vorteilhaft ergibt sich eine erhöhte Prozessgeschwindigkeit durch das Vorwärmen des Bondwerkzeugs und eine gleichmäßige Erwärmung des Bondwerkzeugs und der Fügepartner durch die Temperaturregelung. Beispielsweise kann das Bondwerkzeug kurzfristig sehr stark erwärmt werden, wenn die Temperatur der Fügepartner überwacht wird und sichergestellt werden kann, dass eine unzulässig hohe Temperatur der Fügepartner durch die Prozessführung vermieden werden kann.

In den Diagrammdarstellungen nach den Fig. 14, 15 und 18 ist gezeigt, dass der Laser nach der Herstellung des ersten Anschlusspunkts und/oder des zweiten Anschlusspunkts nicht deaktiviert wird und bei voller beziehungsweise reduzierter Laserleistung fortbetrieben wird. Dies gilt für den Fall, dass nach dem aktuell hergestellten Anschlusspunkt wenigstens ein weiterer Anschlusspunkt hergestellt wird. Selbstverständlich kann der Laser abgestellt werden beziehungsweise wird der Laser abgestellt, wenn an dem aktuell bearbeiteten Batterieblock alle Anschlusspunkte hergestellt sind beziehungsweise die zur Durchführung des Verfahrens vorgesehen Ultraschall-Laserbondvorrichtung abgeschaltet wird.

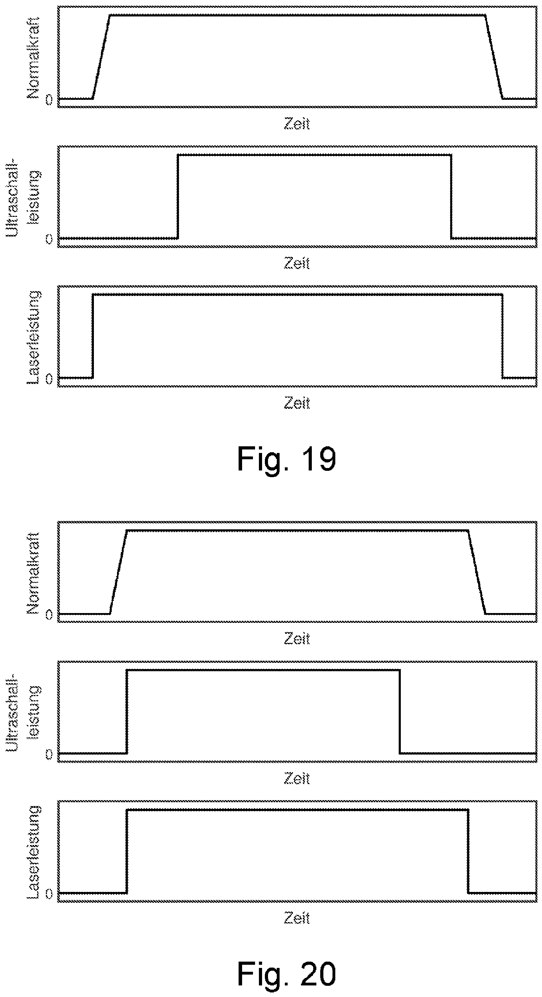

Zwei weitere Varianten des erfindungsgemäßen Ultraschallbondverfahrens sind in den Fig. 19 und 20 dargestellt. Hierbei ist es so, dass die Ultraschallleistung lediglich temporär bereitgestellt ist und nach dem Deaktivieren des Ultraschalls mit dem Laser noch Wärme in die Verbindungsstelle eingebracht werden kann.

In Bezug auf die Durchführung des erfindungsgemäßen Verfahrens wird darauf hingewiesen, dass abhängig von den Materialeigenschaften der verschiedenen Anschlusskontaktflächen 6, 7 beziehungsweise Sammelanschlusskontakte 5 die Prozessdauer angepasst werden kann und insbesondere der zweite Anschlusspunkt an dem Sammelanschlusskontakt 5 auch konventionell hergestellt werden kann und insofern für den zweiten Anschlusspunkt auf eine Erwärmung mittels Lasers verzichtet werden kann.

In Bezug auf das erfindungsgemäße Ultraschallbondverfahren ist es unerheblich, ob zunächst der erste Anschlusspunkt und dann der zweite Anschlusspunkt oder zunächst der zweite Anschlusspunkt und dann der erste Anschlusspunkt hergestellt wird. Ebenso kann an einem Anschlussleiter 4 drei oder mehr Anschlusspunkte hergestellt werden.

Gleiche Bauteile und Bauteilfunktionen sind durch gleiche Bezugszeichen gekennzeichnet.

## Patentansprüche

1. Verfahren zum elektrischen Kontaktieren einer Mehrzahl von Batteriezellen (2, 3) eines Batterieblocks umfassend die folgenden Schritte:
- ein erster Anschlusspunkt wird hergestellt, indem ein Bondwerkzeug unmittelbar und eine erste Anschlusskontaktfläche (6) einer ersten Batteriezelle (2) und/oder ein Anschlussleiter (4) jedenfalls lokal und mittelbar durch einen auf das Bondwerkzeug gerichteten und von einem Laser bereitgestellten Laserstrahl erwärmt werden, indem der Anschlussleiter (4) mittels des Bondwerkzeugs gegen die erste Anschlusskontaktfläche (6) der ersten Batteriezelle (2) angedrückt wird und indem das Bondwerkzeug zu Ultraschallschwingungen angeregt wird, wobei die Ultraschallschwingungen von dem Bondwerkzeug auf den Anschlussleiter übertragen werden;
- ein zweiter Anschlusspunkt wird hergestellt, indem der Anschlussleiter (4) von dem Bondwerkzeug gegen eine zweite Anschlusskontaktfläche (7) einer zweiten Batteriezelle (3) des Batterieblocks oder einen Sammelanschlusskontakt (5) des Batterieblocks angedrückt und zu Ultraschallschwingungen angeregt wird.

2. Verfahren nach Anspruch 1, **dadurch gekennzeichnet, dass** bei der Herstellung des zweiten Anschlusspunkts das Bondwerkzeug mittels des Laserstrahls unmittelbar und infolge der Erwärmung des Bondwerkzeugs von ebendiesem mittelbar und jedenfalls lokal der Anschlussleiter (4) und/oder die zweite Anschlusskontaktfläche (7) und/oder der Sammelanschlusskontakt (5) mithilfe des Bondwerkzeugs erwärmt werden.

3. Verfahren nach Anspruch 1 oder 2, **dadurch gekennzeichnet, dass** eine Mehrzahl von ersten Anschlusskontaktflächen (6) verschiedener erster Batteriezellen (2) durch eine zu der Anzahl der verschiedenen ersten Batteriezellen (2) korrespondierenden Mehrzahl von Anschlussleitern (4) mit einem gemeinsamen Sammelanschlusskontakt (5) verbunden werden.

4. Verfahren nach einem der Ansprüche 1 bis 3, **dadurch gekennzeichnet, dass** die erste Anschlusskontaktfläche (6) der ersten Batteriezelle (2) mit der zweiten Anschlusskontaktfläche (7) einer benachbart zu der ersten Batteriezelle (2) angeordneten zweiten Batteriezelle (3) verbunden wird.

5. Verfahren nach einem der Ansprüche 1 bis 4, **dadurch gekennzeichnet, dass** unmittelbar das Bondwerkzeug mithilfe des Laserstrahls und mittelbar die erste Anschlusskontaktfläche (6) und/oder die zweite Anschlusskontaktfläche (7) und/oder der Sammelanschlusskontakt (5) mittels des Bondwerkzeugs erwärmt werden, während der Anschlussleiter (4) gegen die erste Anschlusskontaktfläche (6) und/oder die zweite Anschlusskontaktfläche (7) oder den Sammelanschlusskontakt (5) angedrückt wird und/oder zu Ultraschallschwingungen angeregt wird.

6. Verfahren nach einem der Ansprüche 1 bis 5, **dadurch gekennzeichnet, dass** während der Herstellung des ersten Anschlusspunkts und/oder des zweiten Anschlusspunkts eine Ultraschallleistung reduziert und/oder auf null abgesenkt wird.

7. Verfahren nach einem der Ansprüche 1 bis 6, **dadurch gekennzeichnet, dass** das Bondwerkzeug mittels des Laserstrahls erwärmt wird, bevor der Anschlussleiter (4) mittels des Bondwerkzeugs angedrückt und/oder zu Ultraschallschwingungen angeregt wird.

8. Verfahren nach einem der Ansprüche 1 bis 7, **dadurch gekennzeichnet, dass** der Laser deaktiviert wird, während der Anschlussleiter (4) von dem Bondwerkzeug gegen die erste Anschlusskontaktfläche (6) und/oder die zweite Anschlusskontaktfläche (7) und/oder den Sammelanschlusskontakt (5) gedrückt und/oder zu Ultraschallschwingungen angeregt wird.

9. Verfahren nach einem der Ansprüche 1 bis 8, **dadurch gekennzeichnet, dass** der Laser beim unmittelbaren und/oder mittelbaren Erwärmen des Bondwerkzeugs und/oder der ersten Anschlusskontaktfläche (6) und/oder der zweiten Anschlusskontaktfläche (7) und/oder des Sammelanschlusskontakts (5) pulsierend betrieben wird.

10. Verfahren nach einem der Ansprüche 1 bis 9, **dadurch gekennzeichnet, dass** der Laser fortbetrieben wird, nachdem der Ultraschall deaktiviert ist.

11. Verfahren nach einem der Ansprüche 1 bis 10, **dadurch gekennzeichnet, dass** die erste Anschlusskontaktfläche (6) und/oder die zweite Anschlusskontaktfläche (7) als eine CuSn2-Anschlusskontaktfläche (6, 7) und/oder eine CuFe2-Anschlusskontaktfläche (6, 7) bereitgestellt wird und/oder auf nickelbeschichtetem Stahl bereitgestellt wird und/oder durch eine Sn-beschichtete Oberfläche bereitgestellt wird.

12. Verfahren nach einem der Ansprüche 1 bis 11, **dadurch gekennzeichnet, dass** der Laserstrahl in einer Längsausnehmung geführt wird, die in dem Bondwerkzeug vorgesehen ist, und/oder dass der Laserstrahl auf eine Werkzeugspitze des Bondwerkzeugs gerichtet wird.

13. Verfahren nach einem der Ansprüche 1 bis 12, **dadurch gekennzeichnet, dass** der Laser kontinuierlich betrieben wird derart, dass eine Deaktivierung des Lasers nach der Herstellung des ersten Anschlusspunkts und/oder des zweiten Anschlusspunkts nicht erfolgt, sofern im Weiteren wenigstens ein weiterer Anschlusspunkt hergestellt wird.

## Claims

1. A method for electrically contacting a plurality of battery cells (2, 3) of a battery block, comprising the following steps:
- a first connection point is produced by a bonding tool being heated directly and a first connection contact surface (6) of a first battery cell (2) and/or a connection conductor (4) being heated in any case locally indirectly by a laser beam directed onto the bonding tool and provided by a laser, by the connection conductor (4) being pressed against the first connection contact surface (6) of the first battery cell (2) by means of the bonding tool, and by the bonding tool being excited to ultrasonic vibrations, the ultrasonic vibrations being transmitted from the bonding tool to the connection conductor;
- a second connection point is produced by the connection conductor (4) being pressed by the bonding tool against a second connection contact surface (7) of a second battery cell (3) of the battery block or a collective connection contact (5) of the battery block and being excited to ultrasonic vibrations.

2. The method according to claim 1, **characterized in that** during the production of the second connection point the bonding tool is heated directly by means of the laser beam and, as a result of the heating of the bonding tool by the latter, the connection conductor (4) and/or the second connection contact surface (7) and/or the common connection contact (5) are heated with the aid of the bonding tool indirectly and in any case locally.

3. The method according to claim 1 or 2, **characterized in that** a plurality of first connection contact surfaces (6) of different first battery cells (2) are connected to a shared common connection contact (5) by a plurality of connection conductors (4) corresponding to the number of different first battery cells (2).

4. The method according to any of claims 1 to 3, **characterized in that** the first connection contact surface (6) of the first battery cell (2) is connected to the second connection contact surface (7) of a second battery cell (3) arranged adjacent to the first battery cell (2).

5. The method according to any of claims 1 to 4, **characterized in that** the bonding tool is heated directly with the aid of the laser beam and the first connection contact surface (6) and/or the second connection contact surface (7) and/or the common connection contact (5) are heated indirectly by means of the bonding tool, while the connection conductor (4) is pressed against the first connection contact surface (6) and/or the second connection contact surface (7) or the common connection contact (5) and/or is excited to ultrasonic vibrations.

6. The method according to any of claims 1 to 5, **characterized in that** during the production of the first connection point and/or of the second connection point an ultrasonic power is reduced and/or lowered to zero.

7. The method according to any of claims 1 to 6, **characterized in that** the bonding tool is heated by means of the laser beam before the connection conductor (4) is pressed by means of the bonding tool and/or excited to ultrasonic vibrations.

8. The method according to any of claims 1 to 7, **characterized in that** the laser is deactivated while the connection conductor (4) is pressed by the bonding tool against the first connection contact surface (6) and/or the second connection contact surface (7) and/or the common connection contact (5) and/or is excited to ultrasonic vibrations.

9. The method according to any of claims 1 to 8, **characterized in that** the laser is operated in a pulsed manner during the direct and/or indirect heating of the bonding tool and/or of the first connection contact surface (6) and/or of the second connection contact surface (7) and/or of the common connection contact (5).

10. The method according to any of claims 1 to 9, **characterized in that** the laser is continued to be operated after the ultrasound is deactivated.

11. The method according to any of claims 1 to 10, **characterized in that** the first connection contact surface (6) and/or the second connection contact surface (7) is provided as a CuSn2 connection contact surface (6, 7) and/or a CuFe2 connection contact surface (6, 7) and/or is provided on nickel-coated steel and/or is provided by an Sn-coated surface.

12. The method according to any of claims 1 to 11, **characterized in that** the laser beam is guided in a longitudinal recess which is provided in the bonding tool, and/or **in that** the laser beam is directed onto a tool tip of the bonding tool.

13. The method according to any of claims 1 to 12, **characterized in that** the laser is operated continuously in such a manner that a deactivation of the laser after the production of the first connection point and/or of the second connection point does not take place if at least one further connection point is subsequently produced.

## Revendications

1. Procédé de mise en contact électrique d'une pluralité de cellules de batterie (2, 3) d'un bloc de batterie comprenant les étapes suivantes :
- un premier point de connexion est réalisé en chauffant directement un outil de liaison et, en tout cas localement et indirectement, une première surface de contact (6) d'une première cellule de batterie (2) et/ou un conducteur de connexion (4) par un rayon laser produit par un laser et dirigé vers l'outil de liaison, et en pressant le conducteur de connexion (4) contre la première surface de contact (6) de la première cellule de batterie (2) au moyen de l'outil de liaison, et en excitant l'outil de liaison pour générer des vibrations ultrasonores, les vibrations ultrasonores étant transmises par l'outil de liaison au conducteur de connexion ;
- un second point de connexion est réalisé en pressant le conducteur de connexion (4) avec l'outil de liaison contre une seconde surface de contact (7) d'une seconde cellule de batterie (3) du bloc de batterie ou contre un contact de connexion collective (5) du bloc de batterie et en l'excitant pour générer des vibrations ultrasonores.

2. Procédé selon la revendication 1, **caractérisé en ce que**, lors de la réalisation du second point de connexion, l'outil de liaison est chauffé directement au moyen du rayon laser et le conducteur de connexion (4) et/ou la seconde surface de contact (7) et/ou le contact de connexion collective (5) sont indirectement et en tout cas localement chauffés par l'outil de liaison suite au réchauffement de celui-ci.

3. Procédé selon la revendication 1 ou 2, **caractérisé en ce qu'**une pluralité de premières surfaces de contact (6) de différentes premières cellules de batterie (2) est connectée à un contact de connexion collective (5) commun par une pluralité de conducteurs de connexion (4) dont le nombre correspond à celui des différentes premières cellules de batterie (2).

4. Procédé selon l'une des revendications 1 à 3, **caractérisé en ce que** la première surface de contact (6) de la première cellule de batterie (2) est connectée à la seconde surface de contact (7) d'une seconde cellule de batterie (3) adjacente à la première cellule de batterie (2).

5. Procédé selon l'une des revendications 1 à 4, **caractérisé en ce que** l'outil de liaison est chauffé directement à l'aide du rayon laser et la première surface de contact (6) et/ou la seconde surface de contact (7) et/ou le contact de connexion collective (5) sont chauffés indirectement au moyen de l'outil de liaison pendant que le conducteur de connexion (4) est pressé contre la première surface de contact (6) et/ou la seconde surface de contact (7) ou le contact de connexion collective (5) et/ou est excité pour produire des vibrations ultrasonores.

6. Procédé selon l'une des revendications 1 à 5, **caractérisé en ce que**, pendant de la réalisation du premier point de connexion et/ou du second point de connexion, une puissance des ultrasons est réduite et/ou ramenée à zéro .

7. Procédé selon l'une des revendications 1 à 6, **caractérisé en ce que** l'outil de liaison est chauffé au moyen du rayon laser avant de presser le conducteur de connexion (4) au moyen de l'outil de liaison et/ou de l'exciter pour générer des vibrations ultrasonores.

8. Procédé selon l'une des revendications 1 à 7, **caractérisé en ce que** le laser est désactivé pendant que le conducteur de connexion (4) est pressé par l'outil de liaison contre la première surface de contact (6) et/ou la seconde surface de contact (7) et/ou le contact de connexion collective (5) et/ou pendant son excitation pour générer des vibrations ultrasonores.

9. Procédé selon l'une des revendications 1 à 8, **caractérisé en ce que** le laser est activé par pulsations lors du chauffage direct ou indirect de l'outil de liaison et/ou de la première surface de contact (6) et/ou de la seconde surface de contact (7) et/ou du contact de connexion collective (5).

10. Procédé selon l'une des revendications 1 à 9, **caractérisé en ce que** le laser reste actif après désactivation des ultrasons.

11. Procédé selon l'une des revendications 1 à 10, **caractérisé en ce que** la première surface de contact (6) et/ou la seconde surface de contact (7) sont mises à disposition sous forme de surface de contact en CuSn2 (6, 7) et/ou comme surface de contact en CuFe2 (6, 7) et/ou sur acier revêtu de nickel et/ou mises à disposition sous forme de surface à revêtement Sn.

12. Procédé selon l'une des revendications 1 à 11, **caractérisé en ce que** le rayon laser est guidé dans un évidement longitudinal prévu dans l'outil de liaison et/ou **en ce que** le rayon laser est dirigé sur une pointe de l'outil de liaison.

13. Procédé selon l'une des revendications 1 à 12, **caractérisé en ce que** le laser est activé en service continu de sorte qu'il n'y a pas de désactivation du laser après la réalisation du premier point de connexion et/ou du second point de connexion dans la mesure où au moins un autre point de connexion doit encore être réalisé.
